# EUROPÄISCHE PATENTANMELDUNG

(11) **EP 1 362 712 A2**
(43) Veröffentlichungstag der Anmeldung: **19.11.2003**
(21) Anmeldenummer: 02022857.3
(22) Anmeldetag: 14.10.2002
(51) Int. Cl.: B44C 5/06

(54) **Dekorationsgegenstand mit Holzwurzel und Pflanze**

(30) Priorität: 07.05.2002 DE 20207159 U
(71) Anmelder: Dennerle GmbH, 66957 Vinningen (DE)
(72) Erfinder: Frank, Rainer, 66497 Contwig (DE)
(74) Vertreter: Beyer, Rudi

(57) **Zusammenfassung**

Die Erfindung betrifft einen Dekorationsgegenstand (4), insbesondere zur Verwendung in der Aquaristik, mit einem Aufstellfuß (1) und wenigstens einer darauf oder daran stehend befestigten, baumstammähnlichen Holzwurzel (5) und mindestens einer an der betreffenden Holzwurzel (5) angeordneten künstlichen oder lebenden Wasserpflanze (13-20), wobei der gesamte Dekorationsgegenstand (4) im oder unter Wasser aufstellbar ist.

## Beschreibung

Die Erfindung betrifft einen Dekorationsgegenstand, insbesondere zur Verwendung in der Aquaristik.

Es ist vielfältig vorbekannt, Wasserpflanzen in Aquarien zur Herstellung von Unterwasserlandschaften zu verwenden.

Bekannt ist es auch, andere Gegenstände, zum Beispiel Muschelschalen, Steine und Baumrinden, Äste, Wurzeln oder abgestorbene Baumstücke, in Aquarien zu legen, um einerseits den darin befindlichen Tieren Unterschlupf zu gewähren, andererseits eine Unterwasserlandschaft zu bilden.

Der Erfindung liegt die Aufgabe zugrunde, einen Dekorationsgegenstand zu schaffen, mit dem sich der Verwendungsbereich von lebenden Wasserpflanzen erheblich erweitern läßt.

Die Aufgabe wird durch jeden der **Patentansprüche 1** bis **5** gelöst.

Prinzipiell kann ein Dekorationsgegenstand der erfindungsgemäßen Art aus einer zum Beispiel einseitig gerade abgesägten Holzwurzel, einem daran befestigten Standfuß und einer Art "Baumkrone" aus aufgepflanzter Wasserpflanze bestehen. Bemerkenswert ist hierbei die erfindungsgemäße Anordnung der zum Beispiel abgesägten und senkrecht gestellten Wurzel, die aufgrund der Bepflanzung das Aussehen eines "Unterwasser-Bäumchens" erhält. Dabei können prinzipiell alle Wurzelhölzer, die eine Art "Baumcharakter" oder "Baumstruktur" haben, zum Beispiel bereits ausgefault sind oder im Wasser nicht faulen, verwendet werden. Die Holzwurzeln dürfen keine toxischen Stoffe an das Aquariumwasser abgeben. Als Standfuß oder Sockel kann an sich ein beliebiges Material verwendet werden, das bevorzugt schwerer als Wasser ist, also nicht aufschwimmt und dem ganzen Gebilde aus Aufstellfuß, Holzwurzel und Wasserpflanzen eine sichere, stabile Lage unter oder im Wasser des Aquariums ergibt. Dabei werden auch für den Aufstellfuß beliebige Materialien verwendet, solange sie wasserneutral, stabil und vorzugsweise schwer genug sind, es muß aber nicht gezwungenermaßen sein. Denkbar ist auch ein Aufstellfuß, der leichter als Wasser, der aber so in den (Kies)Boden gedrückt wird, daß die gesamte Konstruktion unter Wasser stehen bleibt, zum Beispiel können Ton bzw. Keramiken, Metalle, Glas, Kunststoff oder dergleichen verwendet werden.

Als Wasserpflanzen sind alle Wasserpflanzen denkbar, die auf der Holzwurzel festwachsen bzw. zumindest gedeihen und unter normalen Aquarienbedingungen weiterwachsen. Auf ein und derselben Holzwurzel können statt einer auch mehrere Pflanzen verschiedener Arten aufgebracht werden. Beispielsweise kann die Holzwurzel mit dem Aufstellfuß durch Schrauben oder Kleben mit einem wasserbeständigen, wasserneutralen und ungiftigen Kleber einstückig verbunden werden, während die Pflanze oder die Pflanzen selbst auf der Holzwurzel ebenfalls durch derartige Kleber befestigt werden können. Der so hergestellte Dekorationsgegenstand kann dann auch einige Zeit, zum Beispiel einige Monate, im Gewächshaus gedeihen, bis die lebenden Pflanzen auf der aus totem Holz bestehenden Holzwurzel festgewachsen sind.

Bei **Patentanspruch 6** ist die Holzwurzel mit dem Fuß einstückig verbunden. Dadurch läßt sich der gesamte Dekorationsgegenstand als einheitliches Teil handhaben, zum Beispiel aus dem Wasser des Aquariums herausnehmen oder auch hineinstellen.

Diese Einstückigkeit kann zum Beispiel dadurch geschehen, daß die Holzwurzel mit mindestens einer Schraube, zweckmäßigerweise von unten her, mit dem Aufstellfuß verbunden ist - **Patentanspruch 7**. Die einstückige Verbindung der Holzwurzel mit dem Aufstellfuß kann aber auch durch Kleben gemäß **Patentanspruch 8** geschehen.

Die Holzwurzel kann aber auch in eine entsprechende Aussparung, Höhlung, des Aufstellfußes, zum Beispiel durch Einstecken, einstückig verbunden werden - **Patentanspruch 9**.

Besteht der Aufstellfuß aus einem nagelfähigen Material, so kann das einstückige Verbinden der Holzwurzel mit dem Aufstellfuß auch durch Nägel geschehen - **Patentanspruch 10.**

**Patentanspruch 11** beschreibt besonders vorteilhafte Wurzelholzarten.

Gemäß **Patentanspruch 12** besteht die Holzwurzel aus einer Wurzelart, die Baumstammcharakter, Baumcharakter oder eine Baumstruktur besitzt. Damit ist gemeint, daß die Holzwurzel, die einteilig oder eingliedrig, aber auch mehrgliedrig, zum Beispiel mit mehreren Verzweigungen, Gabelstücken, (Ästen) ausgebildet sein kann, baumrindenähnliche Strukturen in Form von Runen, Riefen oder Vertiefungen und/oder Maserungen aufweist. Dadurch wird der Dekorationsgegenstand nicht nur besonders griffig, so daß ein Abrutschen beim Handhaben vermieden wird, sondern es entstehen auch eigenartige Lichtreflexe im Wasser des Aquariums.

Nach **Patentanspruch 13** besteht die Holzwurzel aus ausgefaultem oder nicht faulendem Wurzelholz.

Nach **Patentanspruch 14** ist der Aufstellfuß aus Ton gebildet, während er nach **Patentanspruch 15** aus Porzellan oder einem porzellanähnlichen Material besteht.

Bei der Ausführungsform nach **Patentanspruch 16** ist der Ton aus einer "Terracotta-Fliese" oder "Fliesen" gebildet, während er bei der Ausführungsform nach **Patentanspruch 17** aus einem metallischen Werkstoff, zum Beispiel aus rostfreiem Stahl, besteht - **Patentanspruch 18**.

In allen Fällen sollte für den Aufstellfuß ein Material verwendet werden, das wasserneutral, stabil und vorzugsweise schwer genug ist, damit es im Wasser nicht aufschwimmt, sondern zu Boden sinkt. Denkbar ist z. B. auch ein leichter Kunststofffuß, der in den Aquarienboden/Kies gedrückt wird.

Nach **Patentanspruch 19** werden als Pflanzen alle Arten und Varietäten z. B. der Gattung Anubias, Sperrblatt (Familie Araceae, Aronstabgewächse), verwendet.

Nach **Patentanspruch 20** verwendet man dagegen als Pflanzen alle Arten und Varietäten der Gattung Bolbitis, Wasserfarn (Familie Lomariopsidaceae).

Gemäß **Patentanspruch 21** kommen als Pflanzen aber auch alle Arten und Varietäten der Gattung Microsorum, Javafarn (Familie Polypodiaceae, Tüpfelfarngewächse) in Betracht.

Gemäß **Patentanspruch 22** werden für Pflanzen alle Arten und Varietäten der Gattung Vesicularia, Javamoos (Familie Hypnaceae, Schlafmoosgewächse) verwendet.

Grundsätzlich sind dabei alle Wasserpflanzen denkbar, die auf Wurzelhölzern angebracht werden können bzw. vorzugsweise dort festwachsen und unter den normalen Aquarienbedingungen weiterwachsen. Dabei können statt einer Pflanze auch mehrere Pflanzen gleicher oder verschiedener Arten auf einer Holzwurzel oder verschiedenen Ästen ein und derselben Holzwurzel, die mit einem Fuß verbunden ist, angeordnet werden.

**Patentanspruch 23** beschreibt eine weitere Ausführungsform der Erfindung bevorzugter Art.

Weitere vorteilhafte Ausführungsformen beschreiben die **Patentansprüche 24** bis **28**.

In der Zeichnung ist die Erfindung - teils schematisch - an mehreren Ausführungsbeispielen veranschaulicht. Es zeigen:

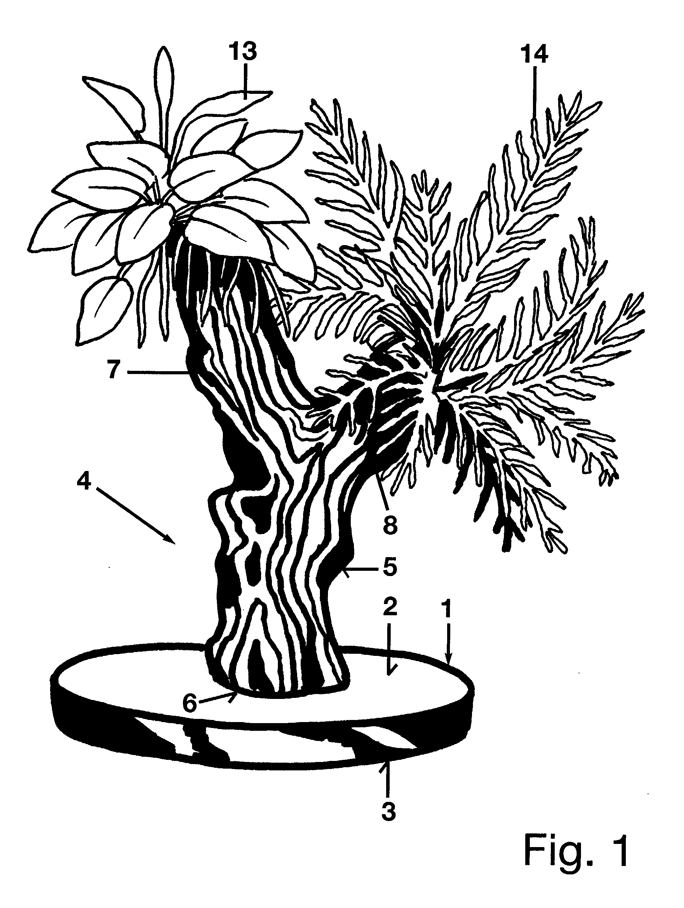

- Fig. 1 bis 3: verschiedene Dekorationsgegenstände, teils perspektivisch, teils in der Seitenansicht.

Mit dem Bezugszeichen 1 ist in der Zeichnung ein Aufstellfuß bezeichnet, der bei den dargestellten Ausführungsformen als flache Scheibe von kreisrunder oder ovaler Grundgestalt ausgebildet ist, wobei der Aufstellfuß 1 an seiner Oberseite 2 und an seiner Unterseite 3 ebenflächig ausgebildet ist. Die Ober- und Unterseite 2 bzw. 3 können parallel zueinander verlaufen.

Abweichend von den dargestellten Ausführungsformen kann der Aufstellfuß 1 aber auch eine andere Grundgestalt aufweisen, zum Beispiel würfelförmig, prismatisch oder dergleichen ausgestaltet sein. Es ist auch nicht unbedingt erforderlich, daß der Fuß 1 an seiner Oberseite 2 ebenflächig ausgebildet ist. Vielmehr kann der Fuß dort zumindest ganz oder teilweise auch mit einer Profilierung versehen sein.

Der Aufstellfuß 1 besteht bei den aus der Zeichnung ersichtlichen Ausführungsformen aus gebranntem Ton, der gegenüber Wasser neutral ist und insbesondere keine Giftstoffe abgibt. Bevorzugterweise wird der Aufstellfuß 1 so dimensioniert und ausgestaltet, daß er dem Dekorationsgegenstand 4 eine gewisse Standfestigkeit auf dem Boden oder dem Bodengrund eines nicht dargestellten Aquariums, also im Wasser, gibt.

Mit dem Bezugszeichen 5 ist insgesamt eine Holzwurzel bezeichnet, die bei allen Ausführungsformen strukturiert ist. Die Strukturen werden durch die verschiedenen Linien der Holzwurzel 5 in der Zeichnung angedeutet.

Die Holzwurzel 5 ist an ihrem der Oberseite 2 des Aufstellfußes 1 zugekehrten Ende mit einer Aufstellfläche 6 versehen, die ebenfalls ebenflächig ist und eine satte Auflage auf der Oberfläche 2 ermöglicht. Diese Aufstellfläche 6 kann durch einen geeigneten Trennvorgang, insbesondere durch Absägen, hergestellt sein. Die Oberfläche 2 und die Aufstellfläche 6 sind bei den in der Zeichnung dargestellten Ausführungsformen durch Kleben mittels eines wasserneutralen, wasserbeständigen, ungiftigen Klebers befestigt, so daß die Holzwurzel 5 nach Art eines Baumes oder Baumstammes auf dem Aufstellfuß 1 - in der Zeichnungsebene - aufrecht stehend angeordnet ist. In dieser Form wird der Dekorationsgegenstand 4 auch verwendet und in das Wasser eines Aquariums gestellt.

Bei der Ausführungsform nach Fig. 1 ist die Holzwurzel 5 an ihrem oberen Ende mit zwei Gabelstücken 7 und 8 versehen, die eine gewisse Länge besitzen. Die Länge der Gabelstücke, gemessen von dem Übergang in den eigentlichen dem Aufstellfuß 1 zugekehrten Stamm ist bei der dargestellten Ausführungsform unterschiedlich, kann aber auch gleich sein. Auch sind die Winkel, in denen die Gabelstücke 7 und 8 in den eigentlichen Stamm der Holzwurzel 5 übergehen, unterschiedlich bemessen.

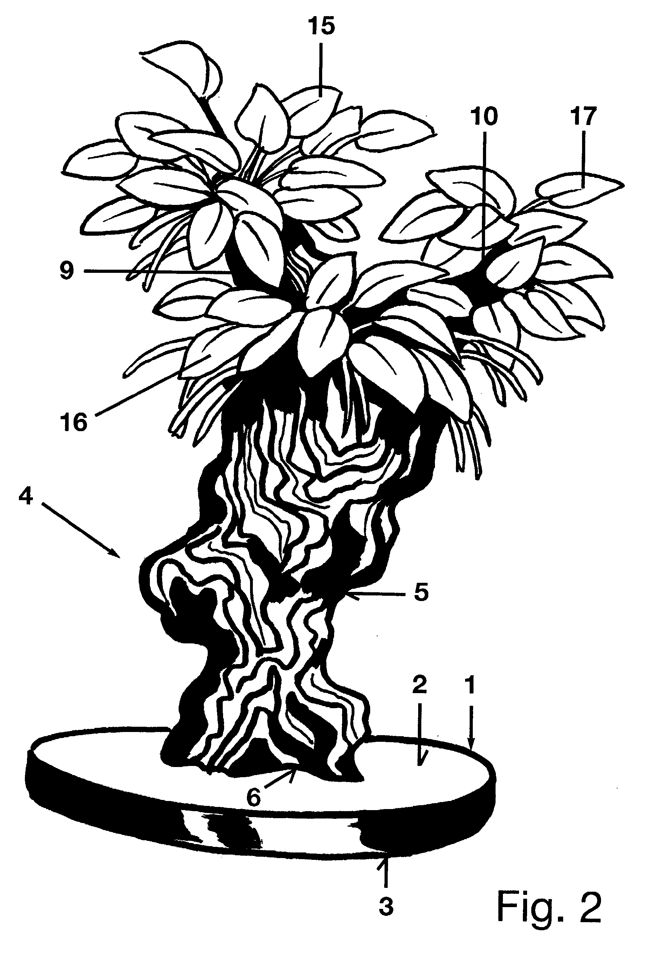

Demgegenüber vermittelt die Holzwurzel 5 bei der Ausführungsform nach Fig. 2 den Eindruck eines knorrigen, alten, kurzen Baumstammes mit an seinen oberen Enden angeordneten, in Vergleich zu Fig. 1 relativ kurzen Gabelstücken 9 und 10.

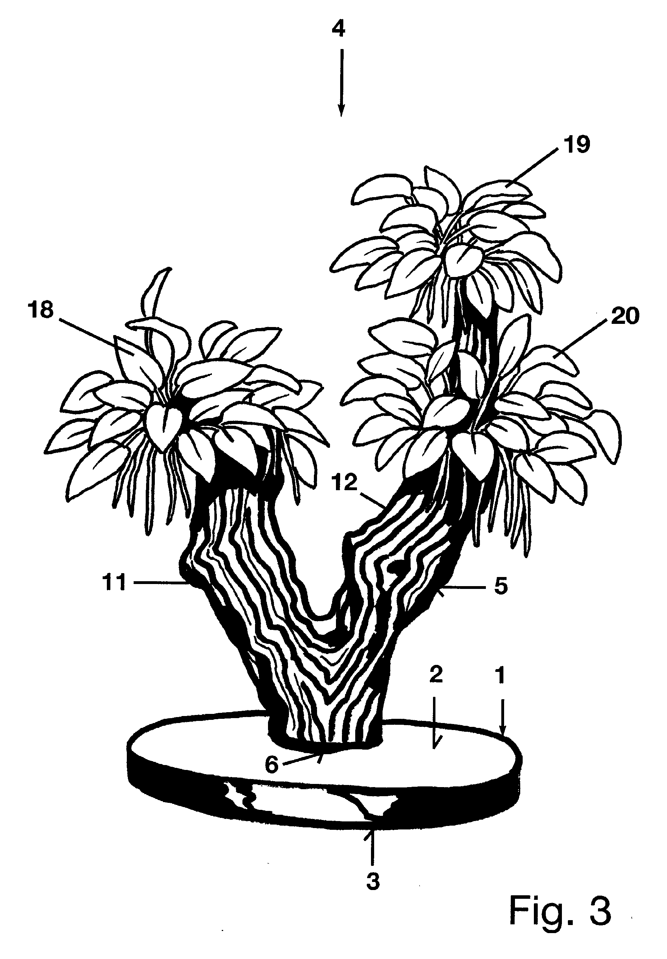

Bei der Ausführungsform nach Fig. 3 ist der eigentliche Stamm der Holzwurzel relativ kurz bemessen, besitzt also nur eine geringe Höhe, während die in den Stamm einstückig übergehenden Gabelstücke 11 und 12 den Eindruck erheblich größerer Länge als bei den vorbeschriebenen Ausführungsformen vermitteln, wobei das Gabelstück 12 länger als das Gabelstück 11 ist, dieses also erheblich nach oben überragt.

Bei sämtlichen Ausführungsformen sind die Holzwurzeln 5 aus totem Wurzelholz gebildet, das bereits ausgefault ist oder im Wasser nicht faulen kann.

Des weiteren erkennt man aus Fig. 1, daß im Bereich der oberen Endabschnitte der Gabelstücke 7 und 8 jeweils eine lebende Pflanze 13 bzw. 14 angeordnet ist. Die Pflanzen 13 und 14 sind von unterschiedlicher Art, während bei der Ausführungsform nach Fig. 2 an den Gabelstücken 9 und 10 mehrere lebende Pflanzen 15, 16 und 17 angeordnet sind.

Dies trifft auch für die Ausführungsform nach Fig. 3 zu, bei der die lebenden Pflanzen mit den Bezugszeichen 18, 19 und 20 bezeichnet sind, wobei die Pflanzen 19 und 20 an dem einen Gabelstück 12 der Holzwurzel 5 in unterschiedlichen Höhenbereichen angeordnet sind, was auch für die Ausführungsform nach Fig. 2 zutrifft.

Bei sämtlichen aus der Zeichnung ersichtlichen Ausführungsformen sind die Pflanzen 13 bis 20 an den entsprechenden Teilen der Holzwurzel festgewachsen oder in sonstiger Weise an dieser befestigt. Die Befestigung der Pflanzen 13 - 20 auf der Holzwurzel 5 kann unter anderem mit einem geeigneten, ungiftigen, wasserneutralen und wasserbeständigen Kleber, durch ein Haarnetz, durch Anschrauben oder Nageln, durch Anheften, durch Anbinden oder durch Anwachsen mittels der Wurzeln der betreffenden Pflanzen 13 - 20 geschehen.

Auch bei den Ausführungsformen nach Fig. 2 und 3 können im Gegensatz zu den dargestellten Ausführungsbeispielen an den verschiedenen Stellen der Holzwurzel 5 Pflanzen gleicher oder unterschiedlicher Art angeordnet, insbesondere festgewachsen, sein.

Nach dem Befestigen der lebenden Pflanzen 13 - 20 an den entsprechenden Teilen der Holzwurzel 5 wird der Dekorationsgegenstand 4 zum Beispiel einige Monate im Gewächshaus aufbewahrt, bis die Pflanzen 13 - 20 auf der Holzwurzel 5 festgewachsen sind. Bevorzugterweise wird dann der Dekorationsgegenstand 4 bestimmungsgemäß verwendet, zum Beispiel im Wasser eines Aquariums aufgestellt, um hier die Unterwasserlandschaft entsprechend zu gestalten. Das Gesamtgebilde aus Aufstellfuß 1, Holzwurzel 5 und den darauf angeordneten lebenden Pflanzen 13 bis 20 läßt sich dabei als einheitliches Teil handhaben.

In allen Fällen ergibt sich durch den erfindungsgemäßen Dekorationsgegenstand 4 eine weitere vielfältige Verwendungsmöglichkeit von lebenden Pflanzen 13 - 20, insbesondere Wasserpflanzen, bevorzugt im Aquaristikbereich, wobei Gegenstände aus toter Materie für den Aufstellfuß 1 und für die Holzwurzel 5 sich mit lebenden Wasserpflanzen 13 - 20 zu einem neuen Gebrauchsgegenstand vereinigen lassen.

In allen Fällen ist es auch möglich, das untere Ende der Holzwurzel 5 nicht abzuschneiden oder mit einer flachen Aufstellfläche zu versehen, sondern die Holzwurzel durch eine entsprechende Öffnung des Aufstellfußes 1 hindurchzustecken und die Holzwurzel 5 mit dem Aufstellfuß 1 unter Preßpassung oder in sonstiger geeigneter Weise, zum Beispiel durch Kleben, in der Lochung zu verbinden.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

### Bezugszeichenliste

- 1: Aufstellfuß
- 2: Oberseite
- 3: Unterseite
- 4: Dekorationsgegenstand
- 5: Holzwurzel
- 6: Aufstellfläche
- 7: Gabelstück
- 8: "
- 9: "
- 10: "
- 11: "
- 12: "
- 13: Pflanze
- 14: "
- 15: "
- 16: "
- 17: "
- 18: "
- 19: "
- 20: "

## Patentansprüche

1. Dekorationsgegenstand (4), insbesondere zur Verwendung in der Aquaristik, mit einem Aufstellfuß (1), wenigstens einer darauf oder daran stehend befestigten, baumstammähnlichen Holzwurzel (5) und mindestens einer an der betreffenden Holzwurzel (5) angeordneten, lebenden Wasserpflanze (13 - 20), wobei der gesamte Dekorationsgegenstand (4) im oder unter Wasser aufstellbar ist.

2. Dekorationsgegenstand (4), insbesondere zur Verwendung in der Aquaristik, mit einem Aufstellfuß (1), wenigstens einer darauf oder daran stehend befestigten, baumstammähnlichen Holzwurzel (5) und mindestens einer an der betreffenden Holzwurzel (5) angeordneten Pflanze (13 - 20).

3. Dekorationsgegenstand (4), insbesondere zur Verwendung in der Aquaristik, mit einem Aufstellfuß (1), wenigstens einer darauf oder daran stehend befestigten, baumstammähnlichen Holzwurzel (5) und mindestens einer an der betreffenden Holzwurzel (5) angeordneten künstlichen Pflanze.

4. Dekorationsgegenstand (4), insbesondere zur Verwendung in der Aquaristik, mit einem insbesondere auf einem Aquariumgrund stehend angeordneten Aufstellfuß (1) aus z. B. nicht schwimmfähigem Material, wenigstens einer stehend daran oder darauf angeordneten toten Holzwurzel (5) und mindestens einer an der toten Holzwurzel (5) angeordneten lebenden Wasserpflanze (13 - 20), wobei der Dekorationsgegenstand (4) ganz oder teilweise im Wasser anzuordnen ist.

5. Dekorationsgegenstand (4), insbesondere zur Verwendung in der Aquaristik, mit einem Aufstellfuß (1) aus praktisch wasserneutralem Material, mit dem der Dekorationsgegenstand (4) im Wasser des Aquariums stehend anzuordnen ist, einer an der Oberseite (2) des Aufstellfußes (1) einstückig angeordneten Holzwurzel (5) aus totem und praktisch wasserneutralen Material, einem oder mehreren, insbesondere im oberen Bereich der Holzwurzel (5) angeordneten oder materialmäßig einstückig damit verbundenen Gabelstücken (7, 8; 9, 10; 11, 12) aus Holzwurzelmaterial und mit mehreren an und auf der Holzwurzel (5) angeordneten lebenden, insbesondere angewachsenen, Wasserpflanzen (13 - 20).

6. Dekorationsgegenstand nach Anspruch 1 oder einem der Ansprüche 4 oder 5, **dadurch gekennzeichnet, daß** die Holzwurzel (5) mit dem Aufstellfuß (1) materialmäßig oder funktionell einstückig verbunden ist.

7. Dekorationsgegenstand nach Anspruch 6, **dadurch gekennzeichnet, daß** die Holzwurzel (5) mit dem Aufstellfuß (1) durch Schrauben einstückig, aber lösbar, verbunden ist.

8. Dekorationsgegenstand nach Anspruch 6, **dadurch gekennzeichnet, daß** die Holzwurzel (5) mit dem Aufstellfuß (1) durch Kleben mittels eines wasserneutralen, ungiftigen und wasserbeständigen Klebers verbunden ist.

9. Dekorationsgegenstand nach Anspruch 6, **dadurch gekennzeichnet, daß** die Holzwurzel (5) in einer Höhlung oder durch eine Ausnehmung im Aufstellfuß (1) mit diesem durch Einstecken verbunden ist.

10. Dekorationsgegenstand nach Anspruch 6, **dadurch gekennzeichnet, daß** die Holzwurzel (5) mit dem Aufstellfuß (1) durch einen oder mehrere Nägel verbunden ist.

11. Dekorationsgegenstand nach Anspruch 1 oder einem der darauffolgenden Ansprüche, **dadurch gekennzeichnet, daß** als Wurzeltypen für die Holzwurzel (5) "Mopani", oder "Herero" oder "African Black", oder verschiedene "Driftwood"-Arten, oder "Rebenhölzer", verwendbar sind.

12. Dekorationsgegenstand nach Anspruch 1 oder einem der darauffolgenden Ansprüche, **dadurch gekennzeichnet, daß** die Holzwurzel (5) eine baumstammähnliche Struktur- bzw. Form aufweist.

13. Dekorationsgegenstand nach Anspruch 1 oder einem der darauffolgenden Ansprüche, **dadurch gekennzeichnet, daß** die Holzwurzel (5) aus ausgefaultem oder aus nicht faulendem Wurzelholz besteht.

14. Dekorationsgegenstand nach Anspruch 1 oder einem der darauffolgenden Ansprüche, **dadurch gekennzeichnet, daß** der Aufstellfuß (1) aus Ton besteht.

15. Dekorationsgegenstand nach Anspruch 1 oder einem der darauffolgenden Ansprüche, **dadurch gekennzeichnet, daß** der Aufstellfuß (1) aus einer oder mehreren Fliesen, z. B. auch aus Porzellan, besteht.

16. Dekorationsgegenstand nach Anspruch 1 oder einem der darauffolgenden Ansprüche, **dadurch gekennzeichnet, daß** der Aufstellfuß (1) aus Terracotta-Material besteht.

17. Dekorationsgegenstand nach Anspruch 1 oder einem der Ansprüche 2 bis 13, **dadurch gekennzeichnet, daß** der Aufstellfuß (1) aus einem metallischem Werkstoff besteht, der gegenüber dem Wasser des Aquariums beständig ist.

18. Dekorationsgegenstand nach Anspruch 17, **dadurch gekennzeichnet, daß** der Aufstellfuß (1) aus Stahl, insbesondere aus rostfreiem Stahl oder aus Kunststoff, besteht.

19. Dekorationsgegenstand nach Anspruch 1 oder einem der darauffolgenden Ansprüche, **dadurch gekennzeichnet, daß** als lebende Pflanzen (13 - 20) jedwede Arten und Varietäten von Wasserpflanzen verwendbar sind, die an der Holzwurzel (5) zu befestigen sind und unter den gängigen Aquarienbedingungen weiterwachsen, insbesondere daß als lebende Pflanzen (13 - 20) Arten und Varietäten der Gattung Anubias, Speerblatt (Familie Araceae, Aronstabgewächse) verwendbar sind.

20. Dekorationsgegenstand nach Anspruch 1 oder einem der Ansprüche 2 bis 18, **dadurch gekennzeichnet, daß** als lebende Pflanzen (13 - 20) Arten und Varietäten der Gattung Bolbitis, Wasserfarn (Familie Lomariopsidaceae) verwendbar sind.

21. Dekorationsgegenstand nach Anspruch 1 oder einem der Ansprüche 2 bis 18, **dadurch gekennzeichnet, daß** als lebende Pflanzen (13- 20) Arten und Varietäten der Gattung Microsorum, Javafarm (Familie Polypodiaceae, Tüpfelfarngewächse) verwendbar sind.

22. Dekorationsgegenstand nach Anspruch 1 oder einem der Ansprüche 2 bis 18, **dadurch gekennzeichnet, daß** als lebende Pflanzen (13 - 20) Arten und Varietäten der Gattung Vesicularia, Javamoos (Familie Hypnaceae, Schlafmoosgewächse) verwendbar sind.

23. Dekorationsgegenstand nach Anspruch 1 oder einem der darauffolgenden Ansprüche, **dadurch gekennzeichnet, daß** die lebenden Pflanzen (13 bis 20) auf Gabelstücken (7 - 12) oder anderen Teilen der Holzwurzel (5) befestigt sind und einige Zeit, vorzugsweise einige Monate, im Gewächshaus anzuordnen sind, bis die Pflanzen (13 - 20) auf der Holzwurzel (5) festgewachsen sind.

24. Dekorationsgegenstand nach Anspruch 1 oder einem der darauffolgenden Ansprüche, **dadurch gekennzeichnet, daß** die lebenden Pflanzen (13 - 20) auf den betreffenden Teilen der Holzwurzel (5) durch Schrauben und/oder Nageln und/oder Heften und/oder Binden und/oder Kleben oder dergleichen, befestigt sind.

25. Dekorationsgegenstand nach Anspruch 1 oder einem der darauffolgenden Ansprüche, **dadurch gekennzeichnet, daß** die lebenden Pflanzen (13 - 20) auf den entsprechenden Teilen der Holzwurzel (5) mit einem Haarnetz befestigt sind.

26. Dekorationsgegenstand nach Anspruch 1 oder einem der darauffolgenden Ansprüche, **dadurch gekennzeichnet, daß** der Aufstellfuß (1) aus einem Material leichter als Wasser besteht, der in dem Boden, z. B. eines Aquariums, befestigt ist.

27. Dekorationsgegenstand nach Anspruch 1 oder einem der darauffolgenden Ansprüche, **dadurch gekennzeichnet, daß** der Aufstellfuß (1) aus Holz, z. B. aus wasserneutralem, nicht faulendem Holz, besteht.

28. Dekorationsgegenstand nach Anspruch 27, **dadurch gekennzeichnet, daß** der Aufstellfuß (1) die Form einer Holzscheibe aufweist.
